# EUROPEAN PATENT APPLICATION

(11) **EP 3 499 533 A1**
(43) Date of publication of application: **19.06.2019**
(21) Application number: 18185424.1
(22) Date of filing: 25.07.2018
(51) Int. Cl.: H01G 11/70, H01G 11/28, H01G 11/38

(54) **ELECTRIC DOUBLE LAYER CAPACITOR**

(30) Priority: 12.12.2017 KR 20170170236
(71) Applicant: Korea JCC Co., Ltd., Chungcheongbuk-do 363-922 (KR)
(72) Inventor: SHIN, Jin Sik, Cheongju-si, Chungcheongbuk-do 361-839 (KR); SHIN, Dal Woo, Cheongju-si, Chungcheongbuk-do 361-764 (KR); LEE, Mun Soo, Cheongju-si, Chungcheongbuk-do 361-765 (KR); KIM, Sung Han, Cheongju-si, Chungcheongbuk-do (KR); OH, Mi Hyun, Cheongju-si, Chungcheongbuk-do (KR); YUN, Hyun, Cheongju-si, Chungcheongbuk-do 28334 (KR); PARK, Ji Yoon, Cheongju-si, Chungcheongbuk-do (KR); LEE, Kyoung Nam, Cheongju-si, Chungcheongbuk-do (KR)
(74) Representative: Lambacher, Michael

(57) **Abstract**

Disclosed herein is an electric double layer capacitor(EDLC). The EDLC includes a casing and an electrode body disposed within the casing and having an electrolyte impregnated therein. The electrode body includes at least one positive electrode foil having an electrode material coated on surfaces of one side and the other side thereof, at least one negative electrode foil disposed and stacked to face the positive electrode foil and having an electrode material coated on surfaces of one side and the other side thereof, and at least one isolation film disposed between the positive and negative electrode foils and stacked on the surface of one side or the other side of the positive or negative electrode foil. A porous current collector in which through holes are arranged and formed is used as a negative electrode foil belonging to the one or more negative electrode foils and disposed on an outside of the electrode body.

## Description

### BACKGROUND OF THE INVENTION

### 1. Technical Field

The present invention relates to an electric double layer capacitor (EDLC) and, more particularly, to an EDLC in which a negative electrode foil is disposed on the outside of an electrode body included in the EDLC and a porous current collector is used as the negative electrode foil disposed on the outside, whereby both electrode materials coated on surfaces of one side and the other side of the negative electrode foil can implement capacitance.

### 2. Description of the Related Art

An electric double layer capacitor (EDLC) is applied to an energy storage device for a smartphone, a hybrid vehicle, an electric vehicle and the generation of solar light. The EDLC uses activated carbon as a positive material or negative material. The activated carbon is coated on a current collector. A technology related to the current collector on which the activated carbon is coated is disclosed in Korean Patent Application Publication No. 10-2011-0000234 (Patent Document 1).

Korean Patent Application Publication No. 10-2011-0000234 relates to a method of manufacturing a current collector. When performing etching by applying an alternating current to an hydrochloric acid electrolyte including chlorine ions in an aluminum foil as a method of improving efficiency by controlling a concentration of aluminum dissolved upon performing the electrolysis etching of a current collector for an EDLC, electrolysis etching according to a frequency is performed by adding AlCl₃. 6H₂O and controlling the concentration. Accordingly, the supply of aluminum ions and chlorine ions is made smooth by controlling a proper amount of molten AlCl₃. 6H₂O, thereby increasing a surface area and capacitance.

In a convention EDLC, such as that disclosed in Korean Patent Application Publication No. 10-2011-0000234, an etching foil is used, and an electrode material such as activated carbon is coated on a surface of one side of the etching foil and a surface of the other side of the etching foil opposite the one side. In the EDLC, an electrode body is fabricated by stacking two or more etching foils on which the electrode material has been coated. In the etching foil located on the outside of the electrode body, an electrode material that belongs to the electrode materials formed on the surfaces of one side and the other side of the etching foil and that is formed on the outermost side of the electrode body cannot implement capacitance. Accordingly, the convention EDLC has a problem in that energy storage density is generally low compared to the volume of the EDLC.

### [Prior Art Document]

### [Patent Document]

(Patent Document 1): Korean Patent Application Publication No. 10-2011-0000234

### SUMMARY OF THE INVENTION

Accordingly, the present invention has been made keeping in mind the above problems occurring in the prior art, and an object of the present invention is to provide an EDLC in which a negative electrode foil is disposed on the outside of an electrode body included in the EDLC and a porous current collector is used as the negative electrode foil disposed on the outside, whereby both electrode materials coated on surfaces of one side and the other side of the negative electrode foil can implement capacitance.

Another object of the present invention is to provide an EDLC capable of improving energy storage density in proportion to the volume while reducing a manufacturing cost because a negative electrode foil is disposed on the outside of an electrode body included in the EDLC and a porous current collector is used as the negative electrode foil disposed on the outside, whereby both electrode materials coated on surfaces of one side and the other side of the negative electrode foil can implement capacitance.

An EDLC according to an embodiment of the present invention includes a casing and an electrode body disposed within the casing and having an electrolyte impregnated therein. The electrode body includes one or more positive electrode foils having an electrode material coated on surfaces of one side and the other side of the positive electrode foil, one or more negative electrode foils disposed and stacked to face the positive electrode foil and having an electrode material coated on surfaces of one side and the other side of the negative electrode foil, and one or more isolation films disposed between the positive electrode foil and the negative electrode foil and stacked on the surface of one side or the other side of the positive electrode foil or the negative electrode foil. A porous current collector in which a plurality of through holes is arranged and formed is used as a negative electrode foil belonging to the one or more negative electrode foils and disposed on an outside of the electrode body.

### BRIEF DESCRIPTION OF THE DRAWINGS

The above and/or other aspects of the present invention will become apparent and more readily appreciated from the following description of the exemplary embodiments, taken in conjunction with the accompanying drawings in which:
FIG. 1 is a perspective view showing an EDLC according to an embodiment of the present invention.
FIG. 2 is a perspective view showing an electrode body shown in FIG. 1.
FIG. 3 is a cross-sectional view taken along line A-A of FIG. 2.
FIG. 4 is an enlarged cross-sectional view of a positive electrode foil shown in FIG. 3.
FIG. 5 is an enlarged cross-sectional view of the positive electrode foil shown in FIG. 4 according to an embodiment.
FIG. 6 is an enlarged cross-sectional view of a negative electrode foil shown in FIG. 3.
FIG. 7 is an enlarged cross-sectional view of the negative electrode foil shown in FIG. 6 according to an embodiment.
FIG. 8 is a plan view of a porous current collector shown in FIG. 7.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

Hereinafter, an EDLC according to an embodiment of the present invention is described below with reference to the accompanying drawings.

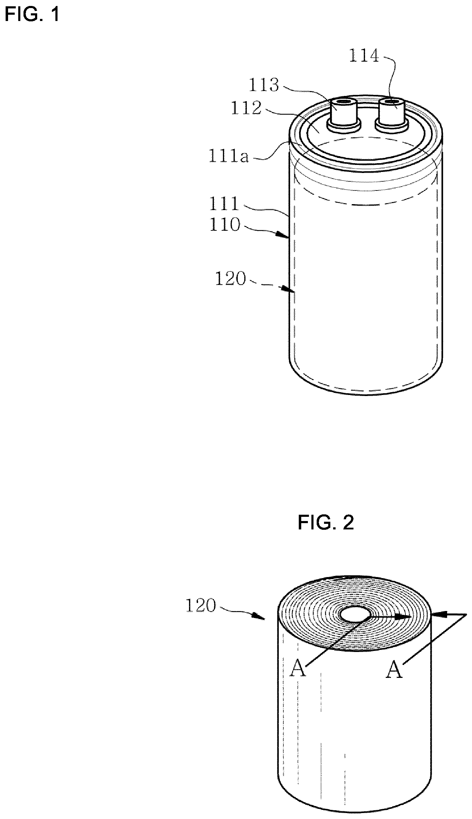

As shown FIGS. 1 to 3, an EDLC according to an embodiment of the present invention is configured to include a casing 110 and an electrode body 120.

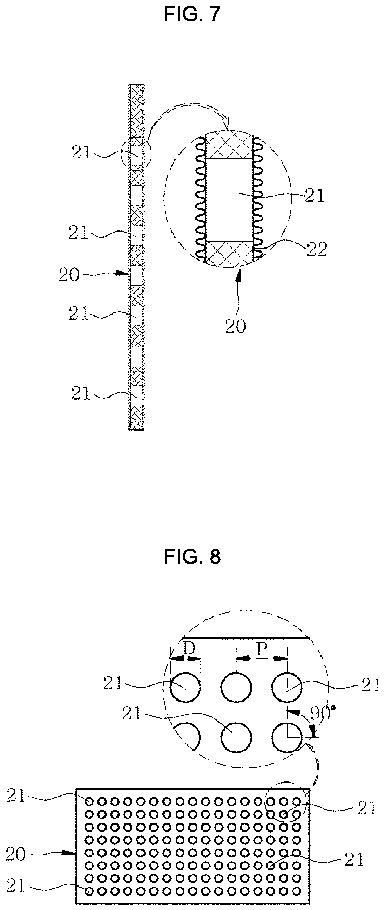

The casing 110 has the electrode body 120 disposed therein and sealed, and generally supports the EDLC according to an embodiment of the present invention. The electrode body 120 has an electrolyte impregnated therein and is disposed within the casing 110. The electrode body 120 is configured to include one or more positive electrode foils 121, one or more negative electrode foils 122, and one or more isolation films 123. An electrode material 121a is coated on surfaces of one side and the other side of the one or more positive electrode foils 121. The one or more negative electrode foils 122 are stacked to face the one or more positive electrode foils 121, respectively. The electrode material 121a is coated on the surfaces of one side and the other side of the one or more positive electrode foils 121. The one or more isolation films 123 are disposed between the positive electrode foil 121 and the negative electrode foil 122 and are stacked on the surface of one side or the other side of the positive electrode foil 121 or negative electrode foil 122. A porous current collector 20 (see FIG. 7) in which a plurality of through holes 21 is arranged is used as a negative electrode foil 122 that belongs to the one or more negative electrode foils 122 and that is located on the outside of the electrode body 120.

The configuration of the EDLC according to an embodiment of the present invention is described in more detail below.

As shown in FIG. 1, the casing 110 includes a cylindrical casing 111, a metal cover 112, and a pair of external electrodes 113 and 114. The electrode body 120 having an electrolyte impregnated therein is disposed in the cylindrical casing 111. A curling part 111a is formed on one side of the cylindrical casing 111. The curling part 111a supports the metal cover 112 in the state in which the electrode body 120 having the electrolyte impregnated therein is disposed within the cylindrical casing 111, thereby sealing the inside of the cylindrical casing 111. In an embodiment of the present invention, as shown in FIG. 1, the casing 110 has been illustrated as being a cylindrical shape, but may be a rectangular casing (not shown) or a pouch (not shown). In an embodiment of the present invention, since the casing 110 has a cylindrical shape, the electrode body 120 is wound in a cylindrical form. Accordingly, when a rectangular casing or a pouch is used as the casing 110, the electrode body 120 may be fabricated by simply winding the positive electrode foil 121, the negative electrode foil 122, and the isolation film 123 or may be fabricated by winding the positive electrode foil 121, the negative electrode foil 122, and the isolation film 123 in an oval.

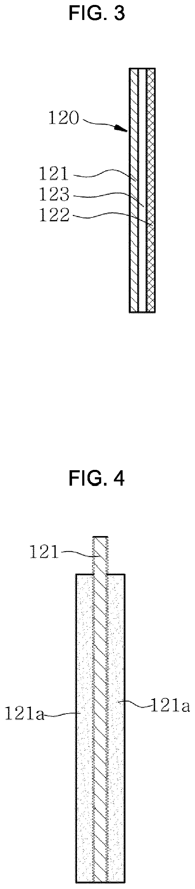

As shown in FIGS. 2 and 3, the electrode body 120 is fabricated by being wound in a cylindrical shape because the casing 110 of a cylindrical shape is used. After the electrode body 120 is wound in a cylindrical shape, it is disposed within the casing 110 after the electrolyte is impregnated in the electrode body 120 and is sealed by the metal cover 112 of the casing 110. The electrode body 120 is configured to include the one or more positive electrode foils 121, the one or more negative electrode foils 122, and the one or more isolation films 123. One positive electrode foil 121, one negative electrode foil 122 and one isolation film 123 have been illustrated as being used in FIG. 3, but two or more positive electrode foils 121, negative electrode foils 122 and isolation films 123 may be used to form the electrode body 120.

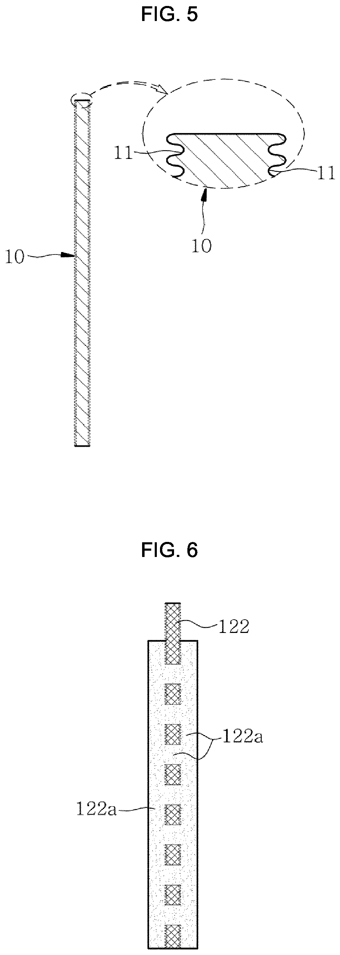

As shown in FIG. 4, the electrode material 121a is coated on the surfaces of one side and the other side of the one or more positive electrode foils 121. An etching foil 10 shown in FIG. 5 is used as the one or more positive electrode foils 121. The one or more positive electrode foils 121 are made of a mixture of one or two or more of aluminum (Al), nickel (Ni) and copper (Cu) materials. A plurality of grooves 11 is formed in a surface of the one or more positive electrode foils 121 using a known etching method in order to improve a surface area. As described above, the etching foil 10 is used as the one or more positive electrode foils 121, and a foil on a surface of which the porous current collector 20 or the grooves 11 have not been formed, that is, a non-etched foil (not shown), in addition to the etching foil 10 may be used as the one or more positive electrode foils 121.

As shown in FIG. 6, the one or more negative electrode foils 122 are disposed to face the one or more positive electrode foils 121, respectively, and are stacked along with the positive electrode foils 121. An electrode material 122a is coated on the surfaces of one side and the other side of the one or more negative electrode foils 122. A porous current collector 20 having a plurality of through holes 21 arranged and formed therein as shown in FIG. 7 is used as a negative electrode foil 122 that belongs to the one or more negative electrode foils 122 and that is located on the outside of the electrode body 120. That is, the porous current collector 20 having the plurality of through holes 21 arranged and formed therein is used as the one or more negative electrode foils 122. The electrode material 122a is coated to fill the plurality of through holes 21 when it is coated on a surface of one side of the porous current collector 20 and a surface of the other side opposite one side. The negative electrode foil 122 is made of a mixture of one or two or more of aluminum (Al), nickel (Ni) and copper (Cu) materials. The plurality of through holes 21 is arranged and formed in the negative electrode foil 122. In this case, the porous current collector 20 has an opening ratio of 1 to 24%. As shown in FIG. 8, if the center of adjacent through holes 21 is 90 degrees, the diameter of each through hole 21 is D, and the length between the centers of the through holes 21 is P, the opening ratio is calculated as (78.5×D²)/P².

The plurality of through holes 21 is arranged and formed in the porous current collector 20 applied to the one or more positive electrode foils 121 and the one or more negative electrode foils 122. The plurality of through holes 21 is buried in the electrode materials 121a and 122a coated on the surfaces of one side and the other sides of the porous current collector 20 and are electrically connected. That is, the plurality of through holes 21 is formed so that the surfaces of one side and the other side of the porous current collector 20 communicate with each other. A foil (not shown) on which etching processing has not been performed and in which the plurality of grooves 11, 22 are formed in surfaces of one side and the other side of the foil as shown in FIGS. 5 and 7 or in which the grooves 11, 22 are not formed on the surfaces of one side and the other side may be used.

The electrode materials 121a and 122a coated on the one or more positive electrode foils 121 and the one or more negative electrode foils 122, respectively, are made of a mixture of activated carbon, a conductive agent and a binder. One of Super-P, ketjen black and carbon black is used as the conductive agent. One or more of polyvinylidene difluoride (PVDF), polytetrafluoroethylene (PTFE), styrene butadiene rubber (SBR) and carboxymethylcellulose (CMC) are used as the binder.

If the one or more positive electrode foils 121 and the one or more negative electrode foils 122 according to an embodiment of the present invention are applied to a hybrid capacitor, the electrode material 121a coated on the one or more positive electrode foils 121 includes a mixture of the activated carbon, the conductive agent and the binder. The electrode material 122a coated on the one or more negative electrode foils 122 includes a mixture of Li₄Ti₅O₁₂, a conductive agent and a binder. In this case, one of Super-P, ketjen black and carbon black is used as the conductive agent. One or more of polyvinylidene difluoride (PVDF), polytetrafluoroethylene (PTFE), styrene butadiene rubber (SBR) and carboxymethylcellulose (CMC) are used as the binder. That is, one or two or more of PVDF, PTFE, SBR and CMC are mixed and used as the binder.

The one or more isolation films 123 are disposed between the positive electrode foil 121 and the negative electrode foil 122 and stacked on the surface of one side or the other side of the positive electrode foil 121 or the negative electrode foil 122. A known technology is applied to the isolation film 123, and a detailed description of the isolation film is omitted.

In order to test capacitance performance of the EDLC according to an embodiment of the present invention, embodiments were performed as in the following table.

**[Table]**

| Classification | Type of positive electrode foil | Type of negative electrode foil | Opening ratio[%] of porous current collector | Capacitance [F/g] |
|---|---|---|---|---|
| 1 | etching foil | etching foil | - | 34.34 |
| 2 | porous current collector | etching foil | 1 | 35.38 |
| 3 | porous current collector | etching foil | 3 | 35.22 |
| 4 | porous current collector | etching foil | 24 | 37.75 |
| 5 | porous current collector | porous current collector | 1 | 38.99 |
| 6 | porous current collector | porous current collector | 3 | 37.75 |
| 7 | porous current collector | porous current collector | 24 | 42.41 |
| 8 | etching foil | porous current collector | 1 | 37.16 |
| 9 | etching foil | porous current collector | 3 | 38.18 |
| 10 | etching foil | porous current collector | 24 | 41.41 |

As indicated by "Classification" in the items shown in the table in order to test performance of the EDLC according to an embodiment of the present invention, ten types of the electrode bodies 120 were fabricated and capacitance [F/g] of the electrode bodies 120 was tested. In a method of manufacturing the electrode body 120, as shown in FIGS. 2 and 3, the casing 110 of a cylindrical shape was used, and thus the electrode body 120 was also wound in a cylindrical shape. That is, the size of the electrode body 120 was set so that the electrode body 120 was received in the casing 110 of a 1020 cell having a diameter of 10 mm and height of 20 mm. After the electrode body 120 was fabricated, an electrolyte was impregnated into the electrode body, and the electrode body was sealed within the casing 110 to fabricate the EDLC. In a method of fabricating the positive electrode foil 121 or the negative electrode foil 122 used when fabricating the electrode body 120 included in the EDLC, first, after the electrode materials 121a and 122a were fabricated in a slurry state, they were coated on the surfaces of one side and the other side of the positive electrode foil 121 or the negative electrode foil 122 and were then dried under a vacuum state at a temperature of 120°C for 24 hours. After the electrode material 121a was coated, the isolation film 123 was interposed between the positive electrode foil 121 and the negative electrode foil 122, which were wound in a cylindrical shape to form the electrode body 120.

In the first of "Classification" of the items of the table, the etching foil 10 was used as both the positive electrode foil 121 and the negative electrode foil 122. The positive electrode foil 121 and the negative electrode foil 122 using the etching foil 10 were wound with the isolation film 123 interposed therebetween, thereby fabricating the electrode body 120. After electrolyte was impregnated into the fabricated electrode body 120, an EDLC was fabricated by receiving the electrode body 120 into the casing 110 of a 1020 cell having a diameter of 10 mm and height of 20 mm. Capacitance of the fabricated EDLC was measured using capacitance measurement equipment (not shown), and the measured results were 34.34 F/g as in the table.

In the second of "Classification" of the items of the table, the porous current collector 20 was used as the positive electrode foil 121, and the etching foil 10 was used as the negative electrode foil 122. If the porous current collector 20 was used as the positive electrode foil 121, the porous current collector 20 was wound to be located on the outside of the electrode body 120. In this case, in the porous current collector 20 used in the positive electrode foil 121, each of the plurality of through holes 21 had a diameter of 100 µm and an opening ratio thereof was 1%. The porous current collector 20 formed to have the opening ratio of 1% was disposed on the outside, thereby fabricating the electrode body 120. After the electrode body 120 was fabricated, electrolyte was impregnated into the electrode body 120. An EDLC was fabricated by receiving the electrode body 120 into the casing 110 of a 1020 cell having a diameter of 10 mm and height of 20 mm. Capacitance of the fabricated EDLC was measured using capacitance measurement equipment, and the measured results were 35.38F/g as in the table.

In the third of "Classification" of the items of the table, the porous current collector 20 was used as the positive electrode foil 121, and the etching foil 10 was used as the negative electrode foil 122. In this case, the porous current collector 20 used in the positive electrode foil 121 had an opening ratio of 3%. An EDLC was fabricated using the same method as that of the second using the positive electrode foil 121 using the porous current collector 20 having the opening ratio of 3%. Capacitance of the fabricated EDLC was measured as 35.22 F/g.

In the fourth of "Classification" of the items of the table, the porous current collector 20 was used as the positive electrode foil 121, and the etching foil 10 was used as the negative electrode foil 122. In the porous current collector 20 used in the positive electrode foil 121, the through hole 21 had a diameter of 100 µm and an opening ratio of 24%. The electrode body 120 was fabricated so that the porous current collector 20 having the opening ratio of 24% is disposed on the outside of the electrode body 120. After the electrode body 120 was fabricated, electrolyte was impregnated into the electrode body 120. An EDLC was fabricated by receiving the electrode body 120 into the casing 110 of a 1020 cell having a diameter of 10 mm and height of 20 mm. Capacitance of the EDLC using the electrode body 120 including the porous current collector 20 having the opening ratio of 24% was measured as 37.75 F/g.

In each of the fifth to seventh of "Classification" of the items of the table, the porous current collector 20 was used as both the positive electrode foil 121 and the negative electrode foil 122. In the fifth, the porous current collector 20 had an opening ratio of 1%. In the sixth, the porous current collector 20 had an opening ratio of 3%. In the seventh, the porous current collector 20 had an opening ratio of 24%. An EDLC was fabricated by receiving the electrode body 120 using the porous current collector 20 having the opening ratio of 1% into the casing 110 of a 1020 cell. Capacitance of the EDLC was measured as 38.99 F/g as in the table. An EDLC was fabricated using the porous current collector 20 having the opening ratio of 3%, and capacitance of the EDLC was measured as 37.75 F/g as in the table. An EDLC was fabricated by receiving the electrode body 120 using the porous current collector 20 having the opening ratio of 24% into the casing 110 of a 1020 cell. The results of the measurement of capacitance of the EDLC were 42.41 F/g as in the table.

In the eighth of "Classification" of the items of the table, the etching foil 10 was used as the positive electrode foil 121, and the porous current collector 20 was used as the negative electrode foil 122. In the porous current collector 20 used in the negative electrode foil 122, the through hole 21 had a diameter of 100 µm and an opening ratio of 1 %. The electrode body 120 was fabricated so that the porous current collector 20 is disposed on the outside using the porous current collector 20 having the opening ratio of 1 % in the negative electrode foil 122 only. An EDLC was fabricated using the fabricated electrode body 120. Capacitance of the EDLC fabricated according to the eighth embodiment was measured as 37.16 F/g.

In the ninth of "Classification" of the items of the table, the etching foil 10 was used as the positive electrode foil 121, and the porous current collector 20 was used as the negative electrode foil 122. The porous current collector 20 had an opening ratio of 3%. After the electrode body 120 was fabricated so that the porous current collector 20 is disposed on the outside, an EDLC was fabricated using the electrode body 120. Capacitance of the EDLC was measured as 38.18 F/g as in the table.

In the tenth of "Classification" of the items of the table, the etching foil 10 was used as the positive electrode foil 121, and the porous current collector 20 was used as the negative electrode foil 122. In the porous current collector 20 used in the negative electrode foil 122, the through hole 21 had a diameter of 100 µm and an opening ratio of 24%. As described above, the porous current collector 20 having the opening ratio of 24% was used in the negative electrode foil 122 only, and the electrode body 120 was fabricated so that the porous current collector 20 is disposed on the outside. An EDLC was fabricated using the electrode body 120. Capacitance of the fabricated EDLC was measured 41.41 F/g.

From the table, it may be seen that capacitance is great if the porous current collector 20 is used as the negative electrode foil 122. That is, by disposing the negative electrode foil 122 on the outside of the electrode body 120 and using the porous current collector 20 as the negative electrode foil 122 disposed on the outside, both the electrode materials 122a coated on the surfaces of one side and the other side of the negative electrode foil 122 can implement capacitance. Accordingly, a rise of a manufacturing cost can be prevented and energy storage density can be improved because both the positive electrode foil 121 and the negative electrode foil 122 are applied to the porous current collector 20.

The EDLC according to the embodiments of the present invention may be applied to a capacitor or cell fabrication industrial field.

In the EDLC according to the embodiments of the present invention, the negative electrode foil is disposed on the outside of the electrode body included in the EDLC, and the porous current collector is used as the negative electrode foil disposed on the outside. Accordingly, there is an advantage in that both the electrode materials coated on the surfaces of one side and the other side of the negative electrode foil can implement capacitance. Furthermore, both the electrode materials coated on the surfaces of one side and the other side of the negative electrode foil can implement capacitance because the porous current collector is used as the negative electrode foil disposed on the outside. Accordingly, there are advantages in that a manufacturing cost can be reduced and energy storage density can be improved in proportion to the volume.

## Claims

1. An electric double layer capacitor (EDLC), comprising:
a casing; and
an electrode body disposed within the casing and having an electrolyte impregnated therein,
wherein the electrode body comprises one or more positive electrode foils having an electrode material coated on surfaces of one side and the other side of the positive electrode foil, one or more negative electrode foils disposed and stacked to face the positive electrode foil and having an electrode material coated on surfaces of one side and the other side of the negative electrode foil, and one or more isolation films disposed between the positive electrode foil and the negative electrode foil and stacked on the surface of one side or the other side of the positive electrode foil or the negative electrode foil, and
a porous current collector in which a plurality of through holes is arranged and formed is used as a negative electrode foil belonging to the one or more negative electrode foils and disposed on an outside of the electrode body.

2. The EDLC of claim 1, wherein an etching foil is used as the one or more positive electrode foils.

3. The EDLC of claim 1, wherein:
the porous current collector in which the plurality of through holes has been arranged and formed is used as the one or more positive electrode foils, and
the electrode material is coated to fill the plurality of through holes when the electrode material is coated on a surface of one side of the porous current collector and a surface of the other side opposite the one side.

4. The EDLC of claim 1, wherein:
the porous current collector in which the plurality of through holes has been arranged and formed is used as the one or more negative electrode foils, and
the electrode material is coated to fill the plurality of through holes when the electrode material is coated on a surface of one side of the porous current collector and a surface of the other side opposite the one side.

5. The EDLC of claim 3 or 4, wherein:
the plurality of through holes is formed so that the surfaces of one side and the other side of the porous current collector communicate with each other, and
a plurality of grooves is formed in the surfaces of one side and the other side of the porous current collector.

6. The EDLC of claim 5, wherein:
the positive electrode foil and the negative electrode foil is made of a mixture of one or two or more of aluminum (Al), nickel (Ni) and copper (Cu) materials,
one of the etching foil and the porous current collector is used as the positive electrode foil and the negative electrode foil,
a plurality of grooves is formed in a surface of the etching foil, and
the plurality of through holes is arranged and formed in the porous current collector.

7. The EDLC of claim 6, wherein the porous current collector has an opening ratio of 1 to 24%.

8. The EDLC of claim 1, wherein:
the electrode material comprises a mixture of activated carbon, a conductive agent and a binder,
the conductive agent comprises one of Super-P, ketjen black and carbon black, and
the binder comprises one or more of polyvinylidene difluoride (PVDF), polytetrafluoroethylene (PTFE), styrene butadiene rubber (SBR) and carboxymethylcellulose (CMC).
